# FASCICULE DE BREVET EUROPEEN

(11) **EP 0 569 035 B1**
(45) Date de publication et mention de la délivrance du brevet: **28.07.1999**
(21) Numéro de dépôt: 93107483.5
(22) Date de dépôt: 07.05.1993
(51) Int. Cl.: H01M 2/22, H01M 2/26

(54) **Prise de contact électrique sur des anodes de lithium**
Elektrische Zwischenverbindung auf Lithiumanoden
Electrical interconnection on lithium anodes

(30) Priorité: 08.05.1992 CA 2068290
(43) Date de publication de la demande: 10.11.1993
(73) Titulaire: HYDRO-QUEBEC, Montréal Québec H2Z 1A4 (CA)
(72) Inventeur: Gauthier, Michel, Québec, J5R 1E6 (CA); Bélanger, André, Québec J3E 1KL (CA); Jacobs, James K., Ontario M5R 3C2 (CA); St.-Amant, Guy, Québec G8Y 6N7 (CA); Ricard, Serge, Québec G9N 5Z8 (CA)
(74) Mandataire: Casalonga, Axel

(56) Documents cités:
- US-A- 4 307 162
- US-A- 4 767 682
- US-A- 5 053 295

## Description

L'invention décrit des dispositifs et des procédés de prise de contact électrique latéraux sur des feuillards de lithium utilisés comme anodes dans des générateurs au lithium constitués d'au moins un ensemble multicouche de films minces d'électrodes et d'électrolytes polymères sous forme enroulés ou empilés. L'objet des revendications indépendantes 1 et 7 concerne des matériaux et des dispositifs de prise de contact sur les feuillards de lithium minces à proximité des matériaux plastiques du générateur ainsi que des façons de réaliser ces dispositifs. Les dispositifs de prise de contact latéral revendiqués sont particulièrement bien adaptés à des générateurs tout-solides à électrolytes polymères car ils sont peu résistifs, compacts, adaptés à la réactivité chimique du lithium et de ses alliages et capables d'assurer un échange de chaleur efficace entre le générateur et son boîtier externe. Dans un des dispositifs privilégié, le contact électrique sur le lithium mince des feuillards est réalisé par un métal compatible, préférentiellement le cuivre, le fer, le nickel ou leurs alliages, appliqué directement sur le lithium. Une variante de ce dispositif consiste à réaliser d'abord une couche métallique intermédiaire d'un métal à base de lithium ou d'alliages de lithium à bas point de fusion appliquée sous forme de dépôt compact sur l'extrémité des feuillards de lithium. Ce dépôt appelé couche métallique intermédiaire facilite ensuite l'établissement d'un second contact électrique, sur son autre face, avec un métal inerte et rigide, compatible avec le lithium, et capable de maintenir la qualité du contact électrique entre l'anode du générateur et le boîtier externe malgré une oxydation superficielle possible du lithium ou de ses alliages.

L'application d'un métal tel que le cuivre directement en contact sur le lithium facilite, lorsque possible, la mise en oeuvre sous air sec du générateur et contribue en plus à faciliter le transfert thermique entre ce dernier et son boîtier externe. L'alternative qui consiste à utiliser un métal tel que le lithium ou ses alliages à bas point de fusion pour réaliser une couche métallique intermédiaire, résoud le problème de la réactivité chimique avec l'anode de lithium, facilite l'auto-soudure et la cohésion du dépôt et assure une certaine déformabilité de la zone de contact lors des cycles thermiques et électrochimiques du générateur. D'autre part, le bas point de fusion du métal d'apport facilite son application sur les arêtes des films de lithium minces, même à courte distance des autres composantes plastiques du générateur: films support isolant du lithium, électrolyte et cathode composite. L'invention comporte des modes préférés de réalisation et décrit également des moyens pour obtenir des dépôts métalliques conducteurs et cohésifs pour la couche métallique compatible avec le lithium ainsi que pour la couche intermédiaire à base de lithium. La qualité des soudures obtenues selon les modes de réalisation de l'invention entre le lithium et ses alliages et certains métaux dures et compatibles est suffisante pour préserver la qualité des contacts électriques de l'anode d'une oxydation de la surface du lithium par la phase gazeuse environnante. Un autre avantage des dispositifs de l'invention est d'assurer un transfert thermique efficace entre les feuillards du générateur et l'enveloppe externe de ce dernier. Cet aspect est particulièrement important pour la sécurité des générateurs au lithium à électrolytes polymères où aucun électrolyte liquide libre ne vient faciliter les échanges thermiques entre le générateur proprement dit et son boîtier externe.

Le développement des générateurs au lithium, primaires et rechargeables, s'est accéléré ces dernières années à la suite de la demande grandissante pour des sources d'énergie denses et légères. La grande densité d'énergie et les propriétés de conservation remarquables des piles au lithium leur confèrent un avantage marqué sur les autres systèmes existants fonctionnant en milieux aqueux. Cependant, un coût de fabrication généralement élevé, une puissance parfois limitée à basse température ainsi que des considérations de sécurité relatives à l'emploi du lithium en limitent encore l'usage aux petites piles et à des marchés spécialisés.

Une façon de remédier à ces limitations consiste à remplacer les électrolytes organiques liquides présentement utilisés dans les générateurs au lithium par des films minces d'électrolytes polymères généralement constitués de complexes de polyéther et de sels de lithium. Il est connu que les films plastiques peuvent être élaborés rapidement et en grandes surfaces par des procédés automatisés sous forme de films minces de l'ordre de quelques micromètres d'épaisseur. Ces films, peu coûteux à produire permettent, en principe, de produire des générateurs de grandes tailles et de fortes puissances par simple accroissement de la surface du générateur sous forme de films minces. D'autre part, la réalisation d'un générateur entièrement solide grâce à l'emploi de polymères solides non-fusibles, au lieu de liquides organiques, permet en principe de réaliser un système plus sécuritaire parce que plus susceptible de limiter les vitesses de réactions des réactifs chimiques entre eux ou, en cas d'exposition accidentelle à l'air ambiant ou à l'eau. Les polymères susceptibles d'être utilisés dans de tels générateurs à l'état solide ont été décrits dans des brevets antérieurs (Brevets US nos: 4 303 748, 4 578 326 et 4 357 401) ainsi que certains de leurs modes d'assemblages (Brevets US nos: 4 897 917, 4 824 746 et FR 2 616 969).

L'accroissement de la surface active des générateurs au lithium lorsque des électrolytes polymères sont utilisés se heurte cependant à la difficulté de développer des surfaces équivalentes pour les collecteurs de courant de l'anode et de la cathode. Une solution pratique consiste, par exemple, dans le cas de la cathode à utiliser l'aluminium et, dans le cas de l'anode, à utiliser le feuillard de lithium lui-même comme collecteur de courant. Cette approche est parfois utilisée dans les générateurs à électrolytes organiques liquides enroulés, par exemple dans les formats AA, C ou D; dans ce cas, l'anode est constituée d'un film de lithium d'environ 130 micromètres (µ) d'épaisseur. A cette épaisseur le lithium est suffisamment résistant pour être manipulé librement par des machines d'assemblage et la collection du courant de l'anode est alors assurée par l'extrémité du feuillard de lithium ou, au besoin, par des languettes métalliques transversales fixées sur le film de lithium à des intervalles périodiques afin de réduire la chute ohmique dans le collecteur. Cette solution est difficilement transposable aux technologies mises en oeuvre pour les générateurs à électrolytes polymères qui utilisent des assemblages beaucoup plus minces et qui nécessitent des épaisseurs de lithium comprises entre 40 et 1 micromètres. A ces épaisseurs, les films de lithium ont beaucoup moins de tenue mécanique et doivent être supportés (notamment, brevets US nos 4 824 746 et 4 897 917) pour pouvoir être manipulés dans des machines d'assemblage. La conductivité électrique limitée du lithium métallique mince interdit d'autre part, dans le cas de piles enroulées, de collecter le courant cumulé en bout de rouleau car la longueur à drainer est importante et entraîne une chute ohmique importante dans le collecteur. Cette limitation, résultant de la minceur des films et des longueurs à mettre en oeuvre dans une technologie de films ultra-minces, impose donc une collection latérale du dispositif enroulé afin de réduire la distance à collecter. Cette constatation est valable également dans le cas de générateurs assemblés par empilement de piles minces discontinues ou en zig zag afin de réduire les pertes ohmiques. Une façon connue d'assurer la collection latérale consiste à appliquer périodiquement des languettes conductrices transversales sur l'anode ou la cathode enroulée pour réduire la longueur à drainer, toutefois cette solution est difficile à adapter à des films très minces (surépaisseur locale ou faible tenue mécanique de la languette). Une autre solution consiste à laminer l'anode de lithium sur un collecteur métallique inerte mince permettant une collection latérale par des procédés conventionnels de soudure sur le collecteur inerte. Toutefois, ce collecteur métallique additionnel pour l'anode s'avère extrêmement pénalisant en terme de poids et de coût. A titre d'exemple, le coût de feuillards de nickel ou de cuivre, métaux compatibles avec le lithium, est d'environ 1 US $/0,09m²(pi²) pour les épaisseurs requises (par ex., 5-10µ).

La fabrication de condensateurs ultra-minces à plastiques métallisés faisant appel à la pulvérisation d'un collecteur latéral sur le bord des films enroulés représente un modèle plus intéressant pour la technologie d'assemblage des accumulateurs au lithium basés sur des électrolytes polymères. Ce type de condensateur est généralement constitué de deux films de plastique isolant identiques (polypropylène ou polyester, d'environ 3 à 30 micromètres) métallisés sur une face, à l'exception d'une bande latérale non-métallisée, et coenroulés légèrement décalés de façon à pouvoir collecter chacun des films à une extrémité opposée à l'aide d'un dépôt métallique appliqué sur l'extrémité métallisée de chacun des deux films. Les contacts électriques utilisés dans ces dispositifs sont généralement à base de zinc, d'aluminium ou d'argent appliqués sous forme de pâtes conductrices comportant un liant organique ou sous forme de dépôts obtenus par pulvérisation: à la flamme "flame spray" ou sous arc électrique (ou shoopage) dans le cas du zinc et de l'aluminium. Ce dernier type de prise de contact, connu dans l'industrie des condensateurs, est décrit dans les brevets (Demande de brevet européen publiée sous le n^{o} 0073555 et demande de brevet français publiée sous le n^{o} 2 589 620).

Nous avons constaté expérimentalement que ces modes d'assemblage et de prise de contact latéral, compacts, rapides et économiques peuvent être adaptés à des générateurs à électrolytes polymères lorsque des collecteurs métalliques inertes sont utilisés, par exemple, pour le collecteur d'aluminium de la cathode. Jusqu'à présent, ces procédés ne semblent pas facilement transposables directement à la collection des anodes de lithium constituées de films minces de lithium pour les raisons suivantes:
la pulvérisation de zinc à la flamme "Flame Spray" utilisée pour les condensateurs n'est pas compatible pour les générateurs au lithium à cause de la libération d'eau due à la combustion;
les formulations de poudre d'argent ou de zinc, généralement à base de liants organiques du type epoxy ne sont pas stables chimiquement en présence du lithium, particulièrement à chaud;
la réactivité chimique du lithium interdit l'emploi des métaux connus tels que le zinc et l'aluminium et leurs alliages normalement utilisés pour la pulvérisation sous arc électrique (shoopage) lors de la fabrication des condensateurs. Nous avons en effet observé expérimentalement que ces métaux, réagissent spontanément sur le lithium pour former des composés intermétalliques durs et friables qui empêchent l'établissement d'un contact électrique peu résistif et fiable;
les métaux compatibles avec le lithium tels que le nickel, le fer, le cuivre, le molybdène, etc., possèdent des points de fusion très élevés et apparaissent de ce fait difficilement applicables directement par vaporisation sur un ensemble multicouche de films de lithium et de matières plastiques. A titre d'exemple, des essais effectués par le demandeur avec un dispositif commercial à pulvérisation par plasma (Plasma Spray) avec un appareil Medco (Division of Perkin-Elmer) Modèle MBN avec de la poudre de nickel ou de cuivre comme métal d'apport indiquent une dégradation thermique importante des films plastiques, isolant de PP et électrolyte polymère du générateur, lorsque le métal est projeté avec le gaz inerte chaud sur la bordure latérale de l'anode d'un générateur enroulé. En principe, la technique de pulvérisation sous arc électrique de ces mêmes métaux semble présenter la même difficulté résultant du choc thermique sur les autres composantes plastiques du générateur.

La présente invention vise à résoudre ces difficultés associées à la collection latérale de films d'anode de lithium dans des générateurs à électrolytes polymères en films minces. Elle décrit des dispositifs de réalisation de contacts latéraux compacts, peu résistifs et chimiquement stables sur des feuillards d'anodes de lithium ultra-minces. Elle comporte également des procédés d'application rapides de ces contacts de façon à faciliter la fabrication de générateurs à électrolytes polymères ultra-minces fiables et économiques. D'autres avantages de l'invention seront présentés dans la description qui suit.

La présente invention décrit un dispositif de prise de contacts électriques latéraux sur des feuillards minces de lithium utilisés comme anodes dans des dispositifs électrochimiques minces (moins de 150 micromètres par cellule élémentaire) mettant en jeu de grandes longueurs de films, généralement sous forme d'enroulements cylindriques ou plats ou sous forme d'empilement d'une ou de plusieurs piles minces.

Les dispositifs privilégiés de l'invention comportent un contact électrique réalisé sur le débordement latéral du ou des feuillards de l'anode, agissant comme collecteur, dans un générateur à électrolyte polymère. Ces contacts sont préférentiellement obtenus par application d'une ou de plusieurs couches métalliques conductrices sur la surface et/ou les bords des arêtes latérales des feuillards de l'anode de façon à faciliter la collection électrique de l'ensemble de l'anode et de façon à faciliter également les échanges thermiques entre le coeur du générateur et son boîtier externe.

Les caractéristiques et avantages de l'invention ressortiront d'ailleurs de la description qui suit de réalisations données à titre purement illustratif mais sans caractère limitatif en référence aux dessins annexés dans lesquels:
la Figure 1a est une coupe du feuillard laminé d'un générateur avec débordement latéral de l'anode de lithium sur lequel le contact peut être établi;
la Figure 1b est une représentation schématique illustrant une couche intermédiaire sur laquelle fut appliqué un second métal constituant le contact électrique;
la Figure 1c est une autre représentation schématique illustrant une couche intermédiaire constituée par compaction et auto-soudure des extrémités des films de lithium entre eux et sur laquelle fut appliqué un second métal constituant le contact électrique;
la Figure 1d est une représentation schématique illustrant l'application directement d'une couche pulvérisée d'un métal compatible avec le lithium en contact intime avec l'extrémité des feuillards de lithium de l'anode;
la Figure 1e est une représentation schématique du contact à la cathode;
la Figure 1f est un schéma d'un générateur en enroulement cylindrique selon l'invention;
la Figure 1g est un schéma d'un générateur selon l'invention obtenu par enroulement d'un laminé sur un mandrin plat;
la Figure 1h représente un générateur plat constitué de plusieurs laminés empilés les uns sur les autres et collectés en bout;
la Figure 2 est un schéma d'un dispositif de pulvérisation de lithium fondu;
la Figure 3a est une vue schématique, en coupe d'un dispositif de laboratoire indiquant les positions respectives des films d'une cellule électrochimique selon l'invention;
la Figure 3b est un agrandissement partiel de la Figure 3a;
la Figure 3c est une représentation schématique en coupe d'un enroulement réalisé avec les 5 films de la Figure 3a;
la Figure 4a est une représentation schématique d'un générateur à électrolyte polymère selon l'invention, illustrant les positions relatives des films utilisés;
la Figure 4b est une variante de la Figure 4a; et
la Figure 4c est une illustration schématique en coupe d'un générateur selon l'invention, illustrant le dispositif de prise de contact.

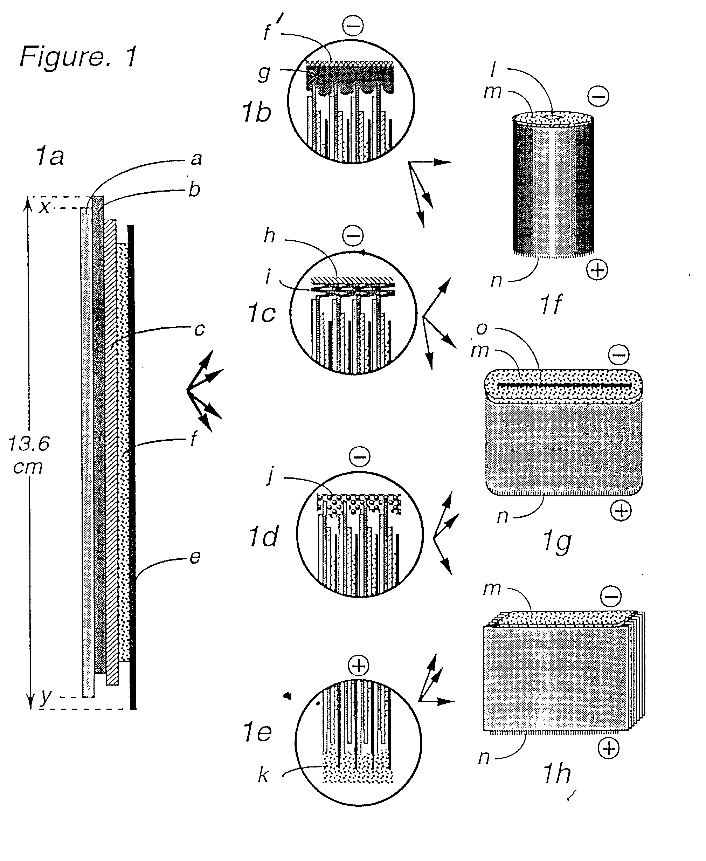

Les dispositifs privilégiés sont décrits de façon schématique à la Figure 1 avec leurs principales caractéristiques. La Figure la illustre une coupe du feuillard laminé du générateur avec le débordement latéral de l'anode de lithium, x, sur lequel le contact peut être établi. Sur cette figure, y représente, à titre d'exemple non-limitatif, le débordement du collecteur de la cathode permettant l'application d'un second contact latéral également compact obtenu en applicant des solutions existantes utilisées avec les condensateurs électriques: pâtes conductrices à l'argent, poudres de zinc et d'aluminium, étain à souder... appliqués directement sur le collecteur inerte.

Les éléments 1b, 1c et 1d illustrent trois modes privilégiés de réalisations des contacts latéraux adaptés à la collection de feuillards d'anodes de lithium non pourvus de collecteurs inertes. Les matériaux possibles utilisés pour la constitution des diverses couches représentées sont identifiés dans la description et les exemples qui suivent ainsi que les principaux procédés thermiques, électriques et mécaniques permettant d'obtenir des contacts électriques et thermiques optimaux. Une façon préférée de réaliser les dispositifs de l'invention consiste à pulvériser au moins une des couches métalliques du contact latéral. Les avantages des couches obtenue par pulvérisation sont: la compacité du dépôt pour réduire l'encombrement des contacts, la capacité d'épouser le profile de surface du substrat sans risque de dommage mécanique dans la zone de contact, la capacité d'optimiser la surface d'échange thermique et de collection de l'ensemble de la surface de contact latérale du générateur.

Les éléments f, g et h, illustrent trois modèles préférés de générateurs dans lesquels les dispositifs de l'invention peuvent être appliqués. L'élément 1f représente un dispositif d'enroulement cylindrique avec noyau central 1, avec, à l'extrémité supérieure, un dispositif de collection de l'anode, m, réalisé selon l'un ou l'autre des éléments 1b, 1c ou 1d de la figure. L'extrémité inférieure comporte, à titre d'exemple, un dispositif, n, de collection latéral illustré en le dans lequel k est un métal en contact avec le collecteur inerte de la cathode. L'élément 1g représente un générateur plat obtenu par enroulement d'au moins un laminé, la, sur un mandrin plat, o, également collecté en bouts, m et n. L'élément 1h, représente un générateur plat constitué d'un ou de plusieurs laminés, la, empilés sous forme individuelle ou sous forme repliée en zig-zag et également collectés en bouts, m et n.

Un premier mode préféré de réalisation de l'invention est illustré à la Fig. la et b. Ce dispositif consiste à constituer une couche métallique intermédiaire rapportée, g, formée de lithium ou ses alliages et permet ainsi de réduire le choc thermique engendré sur les autres composantes plastiques du générateur, par l'application et la soudure d'un métal peu fusible sur les débordements, x, des feuillards de l'anode, b. Cette couche est appliquée sur les extrémités latérales, et au besoin sur les bords, des feuillards de lithium superposés du générateur. Cette couche métallique intermédiaire est appliquée dans des conditions permettant la formation d'une couche relativement dense, conductrice et cohésive, g, d'environ 1 mm, qui soude intimement et consolide mécaniquement les différents feuillards de l'anode, b, entre eux de façon à éviter les pertes de contact électrique par une oxydation possible de la surface des feuillards. Une façon privilégiée d'appliquer cette couche métallique intermédiaire consiste à mettre en contact, sous atmosphère inerte, les arêtes des feuillards de lithium avec du lithium liquide, ou près de son point de fusion, par un procédé tel que la pulvérisation de goutellettes de lithium ou d'alliages à plus bas point de fusion. La couche métallique intermédiaire, g, ainsi constituée facilite l'application d'un second métal plus rigide, f', choisi pour sa compatibilité avec le lithium de la couche intermédiaire, et facilite également les échanges électriques et thermiques entre le coeur au générateur et son boîtier externe. Dans cet exemple non limitatif, le générateur comporte, en plus des feuillards de lithium, un film isolant de polypropylène adhérent ou non au feuillard de lithium, a, l'électrolyte du générateur, c, la cathode, f, et son collecteur, e. Ces films sont plus ou moins en retrait les uns par rapport aux autres de plusieurs mm. Ces retraits sont très importants relativement au épaisseurs réelles des films qui sont de l'ordre de 1-40 microns; sur la Figure 1 l'épaisseur des films est amplifiée de façon disporportionnée pour en faciliter la lecture.

L'emploi d'un métal tel que le lithium ou ses alliages à bas point de fusion, g, comme métal intermédiaire de prise de contact avec les feuillards minces de l'anode présente les avantages suivants:
1) il résoud le problème de la compatibilité chimique du métal d'apport avec les feuillards de lithium;
2) il permet d'assurer un contact électrique et thermique intime (le lithium se soudant à lui-même facilement par fusion et/ou pression mécanique) et consolide l'extrémité latérale de l'anode;
3) il permet une certaine déformabilité de la zone de contact lors des cycles thermiques ou électrochimiques de charge/décharge (le lithium et certains de ses alliages étant très maléables);
4) les bas points de fusion du lithium (180°C) et de certains de ses alliages facilitent leur application sur les feuillards minces de lithium même à proximité des divers films plastiques du générateur;
5) la capacité du lithium de former un dépôt cohérent et dense permet de protéger la zone des contacts des feuillards de l'oxydation par des impuretés possiblement présentes dans l'enceinte du générateur.

Les procédés d'application de métaux tels que le lithium de façon à constituer cette couche métallique intermédiaire, g, comportent cependant une difficulté majeure, c. à .d., le besoin de porter le lithium ou ses alliages à une température voisine du point de fusion sans risquer de provoquer l'oxydation du lithium et sans risquer de fondre les composantes plastiques adjacentes aux feuillards de lithium. Des procédés privilégiés sont décrits pour solutionner ce problème, notamment par la pulvérisation mécanique ou sous arc électrique, sous atmosphère inerte, de lithium liquide ou semi-liquide à une température permettant la soudure des feuillards au métal d'apport. Des alternatives au procédé de pulvérisation sont également possibles, notamment en réalisant la couche intermédiaire à partir d'alliages de lithium à bas point de fusion. Les compositions des alliages à base de lithium peuvent être choisis, à titre d'exemple non limitatif, parmi les systèmes binaires suivants: Li-Ca, Li-Sr et Li-Na, Li-Mg, décrits dans le livre "Constitution of Binary Alloys" Ed. Max Hansen publié par McGraw-Hill Book Company, NY, ou parmi des systèmes plus complexes comportant ces éléments dont les compositions sont riches en lithium et qui sont sensiblement liquides à des température inférieures à 350°C.

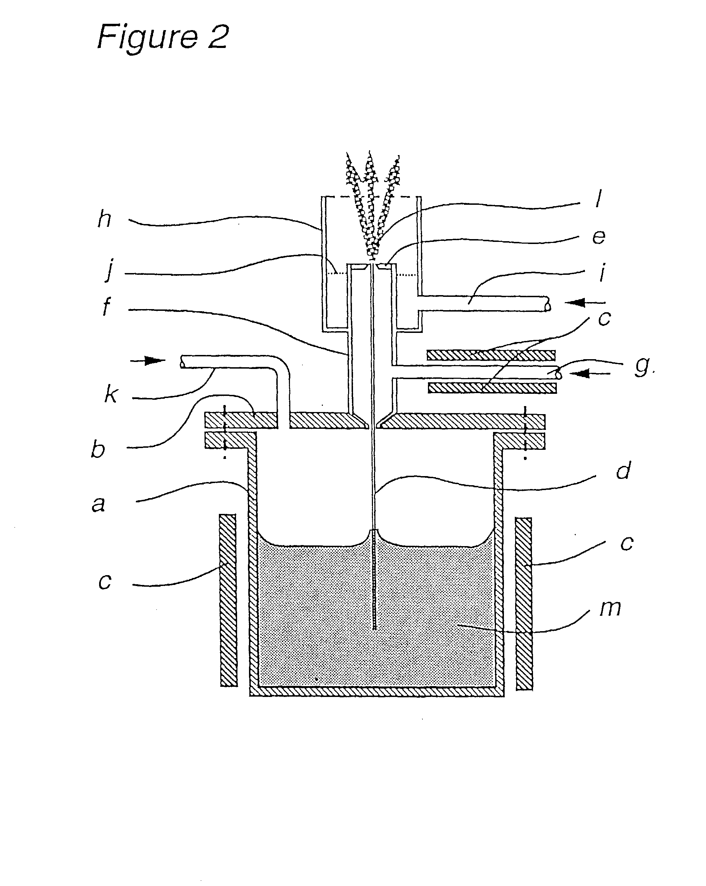

La Figure 2 illustre, à titre d'exemple, un dispositif de pulvérisation de lithium fondu par un procédé mécanique qui utilise un jet de gaz inerte chaud pour projeter des gouttelettes de lithium particulaire liquide ou semi-liquide et réaliser un contact électrique de bonne qualité sur les arêtes des feuillards de lithium. Les principaux éléments de cette figure sont: a, une cuve contenant le lithium ou ses alliages à l'état fondu m, b, le couvercle étanche de la cuve a, c, des éléments chauffants de la cuve a et de l'entrée de gaz inerte chaud g, d, un tube capillaire de diamètre interne d'environ 0,4 mm, e, un bec de pulvérisation, f, un tube externe pour la circulation de gaz chaud. Dans ce dispositif, un jet de lithium fondu, 1, est obtenu en forçant le lithium à monter, à l'aide d'un gaz inerte sous pression introduit en k, dans un tube capillaire d de façon à produire un jet de particules liquides ou semi-liquides par entraînement avec un gaz inerte chaud circulant dans le bec de pulvérisation e. Une gaine de protection h également balayée par un gaz inerte plus froid entrant en i et diffusé en j, permet d'utiliser le dispositif en présence d'oxygène ou d'air sec.

D'autres procédés alternatifs à ce procédé mécanique de formation de la couche intermédiaire peuvent être utilisés, en particulier en pulvérisant du lithium fondu dans un arc électrique, alimenté par deux tiges en lithium, au moyen d'un gaz inerte qui projette les fines gouttelettes de lithium liquide sur les feuillards de l'anode. Ce procédé dérivé du shoopage de zinc ou d'aluminium peut être réalisé en utilisant directement des tiges de lithium ou d'alliages riches en lithium pour générer l'arc électrique, préférentiellement ces tiges seront extrudées directement à proximité de l'arc électrique.

Un second dispositif de prise de contact privilégié basé sur une façon alternative de réaliser la couche métallique intermédiaire est illustré à la Figure 1c. Il consiste à prévoir lors de la fabrication du film d'anode et lors de l'assemblage du générateur un débordement de lithium libre, x, relativement important, préférentiellement compris entre 0,2 à 1,0 cm, pour permettre la constitution après assemblage, d'une couche métallique intermédiaire, i, formée à partir du débordement du feuillard de l'anode. La couche conductrice intermédiaire, i , est constituée préférentiellement par compaction et auto-soudure des extrémités des films entre eux. Une façon de réaliser in-situ cette couche intermédiaire sans risque d'oxydation des surfaces de lithium, consiste à souder l'extrémité des films entre eux par pressage mécanique ou par soudure locale du lithium, par ultra-son ou par fusion.

Dans les deux dispositifs 1 b et 1 c, basés sur la formation d'une couche intermédiaire constituée de lithium ou d'alliages de lithium, il est nécessaire d'appliquer une seconde couche conductrice, f et h respectivement, constituée d'un métal rigide et compatible avec le lithium. Cette seconde couche métallique est essentielle et doit être soudée très intimement avec le lithium de la couche intermédiaire pour maintenir la qualité du contact électrique entre l'anode et le boîtier externe du générateur malgré une oxydation superficielle possible du lithium ou de ses alliages. L'application d'une seconde couche, f' ou h, sur la couche métallique intermédiaire à base de lithium, préférentiellement le nickel, le cuivre, le fer, le molybdène, le titane ou leurs alliages, est facilitée par le gain en tenue mécanique de l'ensemble anode multicouche/couche intermédiaire et par le fait que la couche métallique, g ou i, sépare et protège les composantes plastiques du générateur du choc thermique ou mécanique résultant de la mise en place de ce second métal. C'est le cas, par exemple, lors de l'application du métal, f' ou h, par des procédés de pulvérisation par plasma ou arc électrique ou encore, plus simplement, par des procédés mécaniques, thermiques ou électriques, par exemple, ultra-sons, fusion ou soudure par point. Ces procédés sont utilisés pour fixer et souder intimement le second métal, f ou h, au métal de la couche intermédiaire, g, de façon à pouvoir réaliser un collecteur de courant latéral complet permettant le passage du courant et de la chaleur au travers de l'enveloppe externe du générateur.

De façon générale, la constitution d'une couche métallique intermédiaire séparant les feuillards de lithium de la seconde couche d'un métal rigide compatible avec le lithium offre l'avantage de bien consolider les feuillards de lithium entre eux et surtout de protéger les autres composantes plastiques du générateur de chocs thermiques ou mécaniques. Cette amélioration permet de réduire sensiblement la largeur des débordements latéraux des électrodes requis pour éviter les dégradations thermiques et des court-circuits accidentels résultant de l'application des contacts externes.

Un troisième dispositif privilégié de prise de contact latéral sur l'anode de lithium d'un générateur électrochimique est illustré à la Figure 1d. Ce dispositif simple est particulièrement bien adapté à un générateur à électrolyte polymère. Il est obtenu en réalisant directement une couche pulvérisée d'un métal compatible avec le lithium, j, plus particulièrement le cuivre, le nickel, le fer ou leurs alliages, en contact intime avec l'extrémité des feuillards de lithium de l'anode. L'intérêt de ce dispositif particulier est d'optimiser à la fois la conductivité électrique et thermique de la zone couche latérale de conduction, particulièrement lorsque le métal en contact direct avec les feuillards de lithium est à base de cuivre. Nous avons vérifier que ces dispositifs peuvent être obtenus par pulvérisation sous arc électrique et démontré, par des essais, qu'un contact électrique de qualité est obtenu sur des feuillards de lithium minces, sans dommage thermique pour les composantes plastiques, malgré le fait que les métaux pulvérisés possèdent des points de fusion très élevés supérieurs à 1000^{o}C. La production de couches métalliques conductrices adhérentes au lithium est obtenue, en effectuant une pulvérisation sous arc électrique entre deux fils de cuivre de 1,6 mm de diamètre alimentés en continu à l'aide d'un jet local d'air comprimé appliqué au niveau de l'arc électrique. La puissance utilisée pour l'arc est de 1-3 kW. Dans les conditions expérimentales utilisées et avec les désigns choisis, aucun dommage thermique ou court-circuit n'est observé sur le générateur. Un procédé de pulvérisation sous arc électrique de ces métaux compatibles avec le lithium permet donc de réaliser le dispositif de prise de contact d'une anode de lithium sans film collecteur inerte de la Figure 1d, de façon rapide, sécuritaire et économique. En particulier, la pulvérisation sous arc électrique de cuivre sur le lithium peut être effectuée sous air sec aussi bien que sous atmosphère inerte et n'entraîne pas la formation de poussières de lithium réactif. De plus, l'emploi du cuivre comme métal de contact assure une capacité d'échange thermique optimale entre le générateur et son boîtier externe.

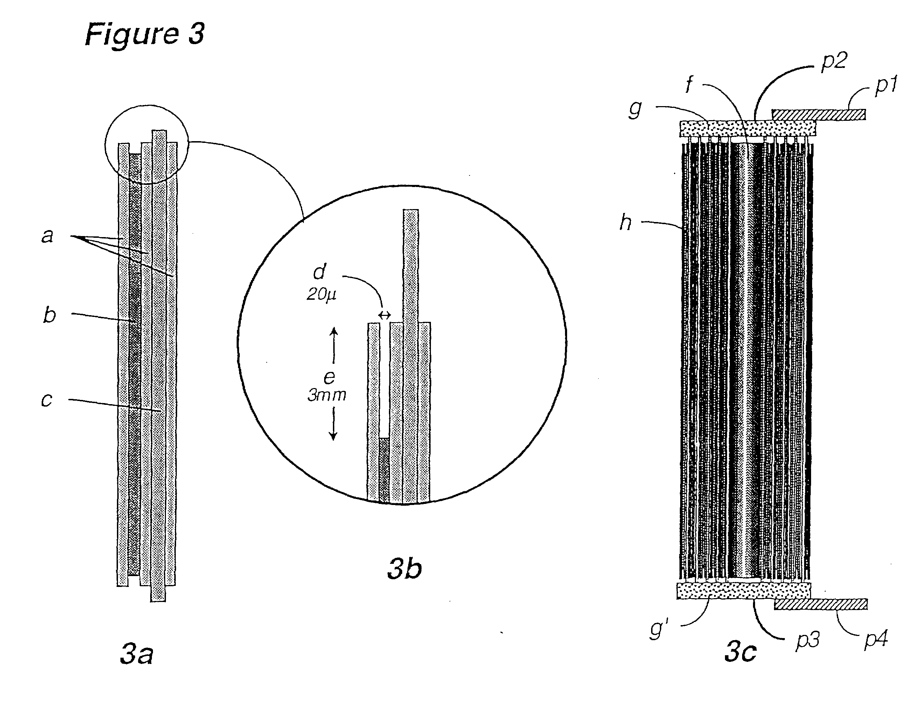

La Figure 3 illustre un dispositif de laboratoire utilisé pour démontrer la qualité des contacts électriques latéraux réalisés sur des feuillards de lithium libres. Un enroulement symétrique 3 c, représenté de façon schématique, est réalisé en coenroulant, sur un noyau plastique de 1,3 cm de diamètre, l'ensemble des films suivants:
a 3 films de polypropylène biétiré de 28 µ d'épaisseur et de 12,1 cm de largeur
b un film d'aluminium, de 20 µ d'épaisseur et de 11,4 cm de largeur
c un film de lithium, de 35 µ d'épaisseur et de 12,7 cm de largeur

Les positions respectives de ces cinq films sont indiquées à la Fig. 3a. Le film de lithium excède les trois films de polypropylènes, placées à la même hauteur, par 3,2 mm alors que le film d'aluminium est placé en retrait de 3,2 mm de ces trois films. La figure 3a utilisée pour décrire les films et leur position, ne permet pas de visualiser le rapport élevé entre la largeur des débordements et l'épaisseur des films, car ces derniers sont représentés surépaissis par un facteur d'environ 100 pour faciliter l'identification des films. Dans le médaillon 3b, ce rapport est réduit à 10, ce qui permet déjà de comprendre plus aisément pourquoi il est possible de contacter le film de lithium en excès avec unm étal pulvérisé, sans pour autant court-circuiter le film d'aluminium placé en retrait, e, et accessible seulement par l'ouverture, d, correspondant à son épaisseur. Le dispositif 3c représente un enroulement de 4 mètres réalisé avec les cinq films décrits en 3a sur un mandrin en plastique de 1,5 mm, f. La représentation est schématique et n'illustre qu'un nombre de tours latérales de prise de contact, g et g' sont représentées de façon schématique et les divers dispositifs de contact étudiés seont décrits dans les exemples qui suivront. Les mesures des résistances de contacts entre le lithium et les collecteurs latéraux sont obtenues par une méthode 4 points. Un courant de 10 Amp. est circulé entre les points P1 et P4, Fig. 3c, alors que les points intermédiaires, P2 et P3, servent de sondes pour mesurer les résistances de contact locales. Le film d'aluminium, b, est électriquement accessible en h, et il est destiné à détecter des court-circuits éventuels résultant de l'application des différents contacts latéraux réalisés selon l'invention. L'épaisseur relative de l'ensemble des films coenroulés est fixé de façon à se rapporcher des espacements présents entre les films et les débordements latéraux d'un générateur complet tel que décrit dans l'exemple qui suit.

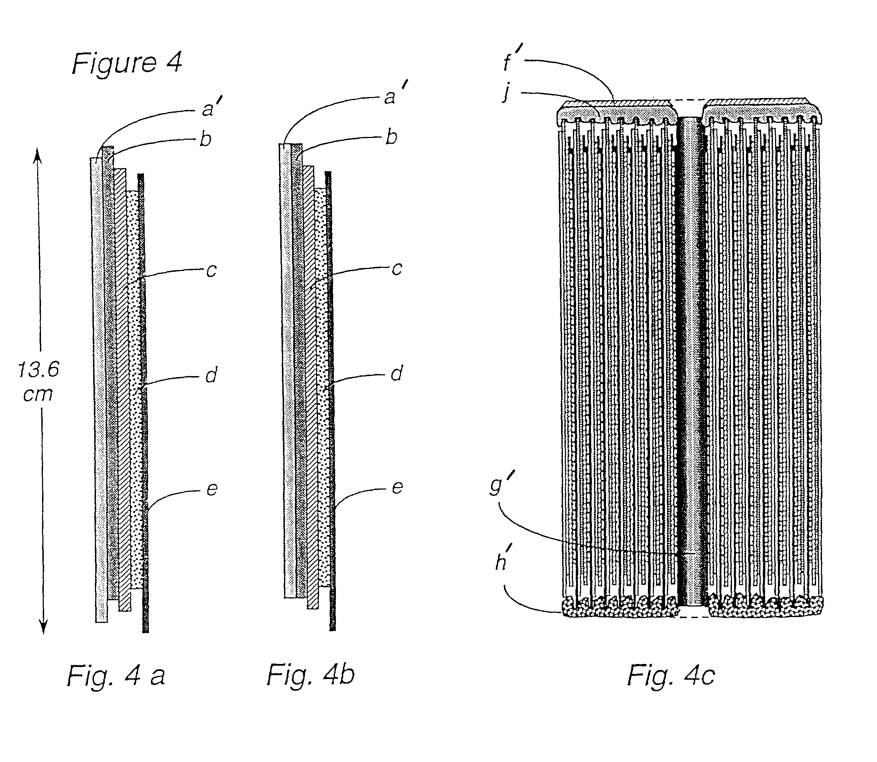

La Figure 4 décrit plus en détail un générateur à électrolyte polymère complet réalisé par enroulement des diverses composantes et en utilisant l'un ou l'autre des dispositifs de prise de contact des feuillards de lithium libre de l'anode: 1b, 1c, ld et le. Les positions relatives des films utilisés sont indiquées sur la Figure 4a. Une variante de cet arrangement est également représentée schématiquement à la Figure 4b, dans laquelle, le lithium sans collecteur métallique additionnel est supporté sur un film de polypropylène adhérent afin de faciliter certains modes d'assemblage. Les films utilisés pour réaliser le générateur et la façon de réaliser les débordements latéraux nécessaires à la collection latérale de l'anode sont illustrés en 4a, 4b et 4c, ce sont:
a' un film isolant de polypropylène de 20 microns d'épaisseur,
b un feuillard de lithium libre de 35 microns débordant latéralement à l'extrémité supérieure d'environ 6,3 mm relativement à la cathode et à son collecteur d'aluminium,
c un électrolyte polymère de 30 microns d'épaisseur débordant latéralement de 3,2 mm du collecteur de la cathode à l'extrémité supérieure d'une part, ainsi que au feuillard de lithium à l'autre extrémité du générateur d'autre part,
f un film de cathode composite à base d'oxyde de vanadium de 45 microns d'épaisseur en retrait latéral sur son collecteur d'aluminium,
e un collecteur d'aluminium pour la cathode de 18 microns d'épaisseur débordant latéralement à l'extrémité inférieure d'environ 6,3 mm relativement au feuillard de lithium,
f' un second métal ridige, à haut point de fusion, compatible chimiquement avec le lithium et bon conducteur de l'électricité et de la chaleur pour permettre l'échange thermique vers l'extérieur du générateur,
g' noyau, ou mandrin interne du générateur en plastique d'environ 1,3 cm de diamètre externe,
h' dispositif de prise de contact latéral de la cathode appliqué sur le débordement de son collecteur d'aluminium,
j une couche métallique intermédiaire à base de lithium en contact intime avec les feuillards de lithium et avec un second métal, f, rigide et compatible avec le lithium.

Dans ses détails, le dispositif de prise de contact de l'anode représenté sur le générateur de la Figure 4c est celui de la Figure 1b tel qu'obtenu à partir de l'appareil de pulvérisation de la Figure 2. Toutefois les éléments f et j peuvent également représenter le dispositif de prise de contact réalisé selon les dispositifs de la Figure 1c et 1d. Dans ce dernier cas, l'élément f est supprimé et l'élément j est alors constitué d'un métal rigide et compatible avec le lithium, préférentiellement obtenu par pulvérisation sous arc.

Les façons de réaliser les débordements latéraux de la cathode et les prises de contact latérales sont données à titre d'exemples non-limitatifs, plusieurs solutions techniques étant applicables à cette électrode, e.g. soudure des feuillards des collecteurs d'aluminium, applications de pâtes conductrices à l'argent, pulvérisation de zinc ou d'aluminium.

Les exemples 1 à 3 décrivent les dispositifs de prise de contact selon l'invention et les façons de les réaliser. Ces exemples sont réalisés sur les débordements des feuillards de lithium des deux extrémités des enroulements symétriques décrits à la Figure 3. L'intérêt de ces dispositifs est de permettre d'étudier spécifiquement la résistance de contact entre les feuillards de lithium et son dispositif de collection latéral. Les dimensions externes des rouleaux utilisés sont: largeur 13,6 cm, diamètre du noyau interne de plastique, g, 1,3 cm., diamètre externe de l'enroulement, 3,0 cm. La longueur des films utilisée est de 4 mètres. Les valeurs des résistances locales sont obtenues grâce à un dispositif de mesure à quatre points illustré sur la Figure 3c qui permet de déterminer les résistances de contact locales. On vérifie de cette façon la résistance électrique de contact entre les feuillards de lithium et le dispositif de contact latéral. Trois tests différents sont ensuite utilisés pour évaluer et comparer la qualité des contacts:
1 la mesure de la résistance de contact après la mise en place du collecteur latéral;
2 l'évolution de cette résistance en fonction du temps à 60°C sur plusieurs jours, c. à .d., la stabilité des collecteurs face aux chocs et aux cycles thermiques;
3 la mesure de la résistance après oxydation contrôlée, à 60°C, du lithium et des ses alliages par la phase gazeuse. Ce test est réalisé en maintenant l'enroulement de la Figure 3 dans une enceinte scellée contenant environ 500 ml d'air ambiant de façon à provoquer une oxydation superficielle de toute surface de lithium accessible à la phase gazeuse. Le collecteur latéral de l'anode de lithium doit comporter une interface lithium ou alliage de lithium/métal compatible au lithium et non oxydable et non réactif et la soudure entre les deux doit être suffisamment intime pour résister à une oxydation superficielle des surfaces accessibles.

Les exemples 4 à 7, décrivent les dispositifs de prise de contact installés sur des générateurs complets et confirment la qualité des contacts réalisés par l'analyse de leurs performances globales. Ces exemples décrivent plusieurs types de dispositifs de contact réalisés et des modèles de générateurs réalisés.

### Exemple 1

Le premier exemple décrit la façon de réaliser le dispositif de prise de contact illustré à la Figure 1b sur l'enroulement symétrique 3c.

Pour réaliser le dispositif 1b, on utilise le dispositif de pulvérisation de lithium fondu illustré à la Figure 2. Les conditions d'utilisation du dispositif sont les suivantes: température du bain de lithium fondu: 250°C, température approximative et débit du jet d'hélium, 215°C et 150 l/min., pression au-dessus du bain fondu: 206824,6 Pa (30 psi) Le jet de lithium fondu est projeté sur l'extrémité de l'enroulement 3c, comportant un débordement d'un film de lithium de 35 microns. Le dépôt correspondant à la couche conductrice intermédiaire g, Fig 1b, est effectué sur trois passes d'environ 5 secondes et possède une épaisseur relativement uniforme de 1 mm. Sur la face externe de la couche intermédiaire, on applique ensuite un feuillard de nickel, second métal dur et compatible au lithium, f de la Fig. lb, que l'on soude par fusion locale du lithium en contact avec le nickel. Les résistances de contact correspondant aux soudures des deux couches de collection g et f sont très bonnes: moins de 0,02 milliohms de surface de tranche des feuillards à collecter. Ces résistances de contact sont inférieures aux résistances observées entre les collecteurs externes et les collecteurs latéraux g et g', Fig. 3c, notamment dans le cas où les contacts sont simplement des contacts mécaniques. Aucun changement significatif n'est observé après stockage à 60°C sur 7 jours et après l'oxydation superficielle des surfaces de lithium accessible à la phase gazeuse durant 7 jours à 60°C. Aucun court-circuit n'est décelé entre l'aluminium, h, Fig. 3c, et les collecteurs latéraux ainsi réalisés. Au démontage, l'examen des propriétés mécaniques du dépôt de lithium pulvérisé confirme la cohésion de la couche métallique intermédiaire et son adhésion avec les feuillards de lithium. Le déroulement des films entraîne en effet l'arrachement du feuillard de lithium en dehors de la zone de soudure avec le lithium projeté. D'autre part, l'examen après démontage des films n'indique aucune dégradation significative du film de polypropylène situé à proximité de la zone où le lithium fondu a été projeté; toutefois on peut constater, après l'essai de pollution à l'air, que le lithium de la zone intermédiaire est gris et oxydé en surface. Les faibles résistances observées dans ce cas confirment que les soudures entre les feuillards, les grains de la zone intermédiaire et le métal de la seconde couche conductrice sont suffisamment intimes pour résister à l'oxydation superficielle du lithium ou de ses alliages.

Un essai équivalent effectué en utilisant un alliage de lithium et de calcium (10% en atomes) dans le dispositif de la Figure 2 conduit à des résistances équivalentes et permet de réduire la température du bain de lithium, m, Fig. 2, et de réduire les risques de court-circuit ou de chocs thermiques sur le générateur.

Deux autres essais effectués en appliquant dans un cas un époxy à l'argent de haute pureté et dans l'autre cas du zinc, projeté par shoopage sur le lithium de la phase intermédiaire, donnent une faible résistance initiale 0,08 milliohm pour la surface de la tranche latérale des feuillards de lithium à collecter, c. à d. 1,4 cm² (ou 35 µ x 400 cm) qui augmente rapidement après stockage à chaud sur plusieurs jours ou après un essai de pollution à l'air 3 milliohms. Ces derniers essais confirment que les solutions traditionnellement utilisées pour les condensateurs électriques, ne sont pas applicables à la collection latérale directe des anodes de lithium d'un générateur.

### Exemple 2

Cet exemple porte sur le dispositif de la Figure lc ainsi que des façons de le réaliser sur l'enroulement de la Figure 3c.

Dans ce type de dispositif de collection latérale, la zone conductrice intermédiaire de lithium, i, Fig. 1c est obtenu après assemblage de l'enroulement en compressant les rebords de lithium de 3 mm de largeur et en les soudant entre eux au moyen d'une sonde à ultra-sons. La couche intermédiaire ainsi constituée mesure environ 1 mm d'épaisseur. On y applique ensuite un feuillard de cuivre mince que l'on soude à la couche intermédiaire par fusion locale du lithium, sous atmosphère inerte, à l'aide d'une plaque chauffante de façon à constituer la seconde couche conductrice h, Fig. lc.

Les résistances de contact de ces dispositifs de collection sont bonnes, environ 0,1 milliohm pour 1,4 cm² de surface latérale des feuillards à collecter et résistent bien à 60°C et à l'essai de pollution par la phase gazeuse.

Une variante de cet essai consiste à enduire au préalable le feuillard de cuivre, h, d'un alliage lithium-calcium à plus bas point de fusion (10% at. Ca) et adhérent de façon à faciliter la fusion et la soudure locale du feuillard à la couche intermédiaire i. L'adhésion mécanique confirme dans ce cas la qualité du dispositif de contact ainsi réalisé.

Un essai équivalent aux précédents dans lequel de la poudre de cuivre ou du nickel est utilisé dans un dispositif de pulvérisation plasma de façon à constituer la seconde couche métallique h, Fig. 1c, conduit également à des résistances équivalentes et stables dans le temps.

Un essai équivalent aux précédents est réalisé dans lequel aucun métal inerte compatible avec le lithium n'est soudé à la couche conductrice intermédiaire i, Fig. 1c. Un métal tel que l'acier ou le nickel est appliqué mécaniquement contre la couche i, de façon à simuler un contact mécanique direct entre la couche intermétallique et un boîtier externe d'un générateur. La résistance de ce contact est initialement faible, environ 0,05 à 0,10 ohm; toutefois cette valeur augmente fortement dès que le contact est porté à 60^{o}C ou soumis à un essai de pollution. Ce test confirme le besoin de terminer le dispositif de collection latérale des feuillards de l'anode par un métal rigide, inerte et compatible avec le lithium de façon à assurer la stabilité des contacts aux bornes externes du générateur non habillé.

L'absence de court-circuit lors de l'application de la seconde couche métallique conductrice h par différents procédés, confirme l'intérêt de la couche conductrice intermédiaire à base de lithium ou d'alliages de lithium pour consolider mécaniquement l'extrémité de l'enroulement 3c et en protéger les composantes plastiques lors des chocs thermiques engendrés par l'application du second métal inerte h.

### Exemple 3

Cet exemple porte sur le dispositif de la Figure 1 d ainsi que sur des façons de le réaliser sur l'enroulement de la Figure 3c.

Ce dispositif en une seule couche est obtenu en applicant par pulvérisation sous arc électrique une couche de cuivre, j, Fig. 1, d'environ 0,5 mm d'épaisseur directement sur les extrémités des feuillards de lithium débordant sur 3 mm. La difficulté apparente de ce type de dispositif simple, est de souder intimement un métal fondant vers 1080^{o}C sur un métal mince fondant a 180^{o}C et sans endommager, d'autre part, les autres films plastiques, a, Fig. 3a, de l'enroulement situés à proximité (3 mm). Les conditions de réalisation de cette couche métallique sont données avec la description de la Figure 3 et tiennent compte également des designs des enroulements, essentiellement, du rapport entre la largeur des débordements, e, Fig. 3, et l'espacement, d, Fig. 3, qui sépare les films et qui résulte de l'épaisseur du ou des films en retrait. La granulométrie des gouttelettes produites lors de la pulvérisation sous arc, notamment dans le cas du cuivre, joue également un rôle important lors de la constitution de la couche conductrice. Il a été constaté que la présence d'un taux important de particules de taille sensiblement équivalente à l'épaisseur des films d'électrolyte et de la cathode obtenue en ajustant le profil du jet d'air comprimé injecté sur l'arc électrique améliore la fiabilité des contacts ainsi établis en réduisant les risques de court-circuit accidentel résultant de l'accumulation de poudres trop fines dans les zones où un des films conducteurs est en retrait, d, Fig. 3b. Les résistances de contacts observés sur des dispositifs obtenus en respectant les dimensions indiquées ont des résistances de contacts très faibles et un comportement excellent à 60^{o}C et lors des essais de pollution. Les valeurs typiques obtenues sont de 0,01 à 0,02 milliohms/cm² de surface latérale de collecteur à contacter.

Au démontage on observe, même après l'essai de pollution à l'air ambiant, une très bonne cohérence de la couche de cuivre et une adhésion forte entre le lithium et la couche de cuivre consolidée par la pulvérisation.

L'intérêt de ce dispositif en une seule couche est que sa simplicité et la nature des matériaux utilisés, notamment le cuivre, optimise au maximum la conductivité électrique de la couche de collection ainsi que sa conductivité thermique qui est nécessaire à la gestion thermique d'un générateur et à son fonctionnement sécuritaire. D'autre part, la combinaison d'une fusion rapide obtenue sous arc électrique avec un jet de gaz froid qui projette les particules sur le lithium, rendent ce procédé particulièrement intéressant pour réaliser le dispositif 1d.

Un essai en utilisant le fer au lieu du cuivre pour réaliser la couche conductrice de collection j Fig. 1, conduit sous air à un dépôt moins cohérent et plus résistif. Toutefois, l'usage d'un gaz inerte améliore le procédé et l'apparence des contacts ainsi réalisés. L'usage du nickel dans un essai équivalent donne des contacts plus adhérents et cohésifs même lorsque de l'air est utilisé pour projeter le métal fondu sous arc électrique.

### Exemple 4

Cet exemple décrit comment les dispositifs de prise de contact de l'anode, illustrés schématiquement à la Figure 1, (b et c), peuvent être utilisés dans un générateur à électrolyte polymère complet tel qu'illustré schématiquement à la Figure 4c.

Les caractéristiques externes du générateur utilisé sous forme d'enroulement cylindrique sont: diamètre interne du noyau plastique 1,3 cm, diamètre externe du générateur 3,3 cm, largeur de l'enroulement 13,6 cm, longueur des films utilisés 4 mètres. La cellule élémentaire utilisée pour l'exemple est celle décrite à la Figure 4a. Elle est assemblée et enroulée en continu par des transfert/lamination successifs, à chaud, des divers films. La capacité installée du générateur non-optimisé est de 10,9 Wh sur la base d'extrapolation des performances de cellules de laboratoire de 4 cm² utilisant les mêmes matériaux.

Le contact de l'anode est réalisé selon la Figure 1c en compactant et en soudant par ultra-sons les rebords de 3 mm de largeur des feuillards de lithium, b, de la Figure 4a de façon à constituer une couche intermédiaire i, d'environ 1 mm d'épaisseur. Cette couche intermédiaire est alors mise à profit pour protéger les autres films du générateur du choc thermique et mécanique résultant de l'application d'un feuillard de cuivre, h, par soudure par fusion superficielle du lithium de la couche i.

Le dispositif de collection latéral de la cathode utilisé dans ce cas comprend une couche mince, environ 0,5 mm de zinc, obtenu par shoopage directement sur le débordement du collecteur d'aluminium de la cathode. La Figure 1e décrit ce type de contact où k est alors constitué de zinc pulvérisé.

La vérification précise de la qualité des contacts sur l'anode est plus difficile à réaliser sur un générateur de cette taille fonctionnant à 60^{o}C. L'évaluation est faite par des mesures d'interruption de courant en cours de décharge. Des courants de 0,4 à 4 Ampères, correspondant à des décharges variant entre 10 et une heure, sont utilisés. De tels courants sont requis pour des applications de type accumulateur pour véhicule électrique. Les chutes ohmiques globales observées sont d'environ 25 milliohms. Ces valeurs correspondent sensiblement aux valeurs prévues à partir des mesures de l'impédance de ce type de pile faite en laboratoire à 60^{o}C (environ 80 Ω /cm2) déduction faite des autres résistances de contact du dispositif de mesure complet. Ces résultats confirment que la résistance du dispositif de contact latéral de l'anode, évaluée dans l'exemple 2 à 0,01 milliohm pour une section de feuillard de lithium à collecter latéralement de 1,4 cm² (35µ par 4 mètres) est négligeable comparativement à la résistance du système électrochimique tenant compte de la surface active de tout l'enroulement de 10 Wh.

Une vérification additionelle de la qualité du dispositif de contact de l'anode est obtenue en déchargeant complètement le générateur à des taux variables. Les taux d'utilisation des matériaux actifs observés correspondent aux valeurs attendues, à la précision près de mesures, ce qui confirme que toute la surface de l'anode est bien drainée par le collecteur latéral. La variation du taux d'utilisation du générateur avec le courant de décharge entre 0,4 et 4 ampères correspond de plus à celle prévue à partir des caractéristiques électrochimiques de la pile, ce qui confirme le bon fonctionnement des contacts latéraux. Les caractéristiques de chute ohmique et de taux d'utilisation des réactifs ne sont pas affectés dans les cycles qui suivent un essai d'exposition' temporaire du générateur à l'air ambiant (500 ml) à 60°C pendant 48 heures, ce qui confirme la qualité des soudures mises en jeu dans le contact latéral des feuillards de l'anode.

### Exemple 5

Cet exemple est équivalent à l'exemple précédent sauf pour la zone intermédiaire du dispositif de prise de contact de l'anode qui est celui de la Figure 1b réalisé de la même façon que pour l'exemple 1. Les caractéristiques du générateur sont équivalentes à ce qui est observé à l'exemple 4.

Cet exemple et sa représentation à la Figure 4c, illustre bien comment les larges surfaces de collection résultant de ce type de prise de contact latéral facilitent les échanges thermiques. La nature du contact latéral, sa faible épaisseur et sa surface sont très favorables à la transmission de chaleur entre le coeur du générateur et son boîtier externe, particulièrement lorsque l'enroulement cylindrique est appuyé directement contre le boîtier, c. à d., contre le fond et contre le couvercle supérieur du boîtier, non représentés sur la Figure 4.

### Exemple 6

Cet exemple met en jeu le dispositif de prise de contact de la Figure 1d dans lequel du cuivre est pulvérisé directement par pulvérisation sous arc électrique sur les bords des feuillards de lithium d'un enroulement décrit à la Figure 4c et réalisé avec le laminé 4a. Dans ce cas cependant, le dépôt de cuivre correspond au dépôt j de la Figure 4c, alors que le feuillard f est supprimé. Les caractéristiques du générateur sont équivalentes à celles des exemples 4 et 5 et le faible échauffement thermique observé sur le générateur lors de dépôt sous air d'environ 0,5 mm de cuivre confirme l'intérêt de ce procédé pour réaliser ce dispositif de collection latéral des feuillards minces de lithium.

### Exemple 7

Cet exemple est identique au précédent sauf pour le positionnement des films utilisés pour produire l'enroulement 4c qui est celui illustré à la Figure 4b. Dans ce cas le laminé utilisé pour réaliser l'enroulement comporte du lithium supporté et adhère sur un film plastique jusque dans la zone de débordement de l'anode. Les caractéristiques mécaniques et électriques du cuivre déposé confirment que le procédé de pulvérisation sous arc électrique peut être utilisé pour déposer des métaux à points de fusion très élevés, 1000^{o}C, sur du lithium d'un générateur même si ce dernier est en contact direct sur un support plastique.

## Revendications

1. Dispositif de prise de contact électrique sur au moins un feuillard d'anode d'un générateur à films minces au lithium à électrolyte polymère, ledit générateur étant constitué d'au moins une cellule électrochimique multicouche, ladite cellule comprenant au moins un feuillard à base de lithium (b) d'épaisseur comprise entre environ 1 et 50 microns formant l'anode et son collecteur (g) et comportant en outre une cathode (f) et son collecteur (e) de même que ledit électrolyte polymère (c), ces derniers se présentant aussi sous forme de feuillards, caractérisé en ce qu'au moins une extrémité latérale (x) du feuillard d'anode (b) s'étend au-delà des extrémités correspondantes de ladite cathode (f) et dudit collecteur cathodique (e) pour constituer une zone de débordement, ledit dispositif comportant une couche métallique (f', h ou j) constituée d'au moins un métal rigide et compatible avec le lithium, choisi parmi le nickel, le cuivre, le fer, le molybdène, le titane ou leurs alliages, ladite couche métallique étant en contact électrique avec ladite extrémité latérale dudit feuillard d'anode mais sans contact électronique avec les autres composantes de ladite cellule, ladite couche métallique constituant la borne externe du générateur en condition non habillé.

2. Dispositif de prise de contact électrique selon la revendication 1, caractérisé en ce que ladite couche métallique (g) est en contact intime avec ladite extrémité latérale (x) dudit feuillard d'anode (b) permettant ainsi la collection électrique sur toute l'extrémité latérale dudit feuillard d'anode.

3. Dispositif de prise de contact électrique selon la revendication 1, caractérisé en ce qu'il comporte une zone métallique intermédiaire conductrice et cohésive (g), constituée de lithium ou d'alliages ductiles riches en lithium, en contact intime avec ladite extrémité latérale (x) dudit feuillard d'anode (b), ladite couche métallique étant en contact électrique avec ladite extrémité latérale dudit feuillard d'anode par le truchement de ladite zone intermédiaire, ladite zone intermédiaire faisant en sorte de permettre la collection électrique sur toute l'extrémité latérale du feuillard d'anode en lithium ou en alliages ductiles riches en lithium, protéger les autres composantes de ladite cellule de chocs thermiques et mécaniques, et faciliter à ladite extrémité latérale du feuillard d'anode des échanges thermiques avec ledit générateur.

4. Dispositif de prise de contact électrique selon la revendication 2, caractérisé en ce que le feuillard d'anode (b) est supporté sur un film plastique constitué soit d'un film isolant (a), d'épaisseur inférieure à 10 microns, soit de l'électrolyte polymère (c) lui-même dont l'épaisseur est comprise entre 5 et 100 microns, la largeur de la zone de débordement (x) du feuillard d'anode représentant moins de 5% environ de la largeur utile du feuillard d'anode.

5. Générateur à électrolyte polymère multicouche comportant au moins l'un ou l'autre des ensembles ou sous-ensemble de films suivants: isolant plastique (a')/anode de lithium (b)/électrolyte polymère (c)/cathode (d)/collecteur métallique (e) ou cathode (f)/électrolyte polymère/anode de lithium (b)/électrolyte polymère (c)/cathode muni d'un dispositif de prise de contact électrique (g, h, j) selon l'une quelconque des revendications 1 à 4, et dont la cathode (f) est collectée latéralement par un second dispositif constitué d'un débordement de son collecteur (e) en contact électrique avec une couche métallique (k) de collection.

6. Générateur à électrolytes polymères multicouche selon la revendication 5 placé dans un boîtier métallique externe dont le dispositif de prise de contact électrique est placé en contact direct avec le boîtier métallique externe de façon à optimiser les échanges thermiques par l'anode.

7. Procédé de préparation d'un dispositif de prise de contact électrique sur au moins un feuillard d'anode (b) d'un générateur au lithium à électrolyte polymère (c), ledit générateur étant constitué d'au moins une cellule électrochimique multicouche, ladite cellule comprenant au moins un feuillard à base de lithium d'épaisseur comprise entre environ 1 et 50 microns formant l'anode (b) et son collecteur (a) et comportant en outre une cathode (f) et son collecteur (e) de même que ledit électrolyte polymère (c), ces derniers se présentant aussi sous forme de feuillards, caractérisé en ce qu'on élabore ladite cellule pour qu'au moins une extrémité latérale du feuillard d'anode (b) s'étende au-delà des extrémités correspondantes de ladite cathode (f) et dudit collecteur cathodique (e) pour constituer une zone de débordement (x), l'on dépose une couche métallique (f', h ou j) constituée d'au moins un métal rigide et compatible avec le lithium, choisi parmi le nickel, le cuivre, le fer, le molybdène, le titane ou leurs alliages, au niveau de ladite zone de débordement de sorte que ladite couche métallique soit en contact électrique avec ladite extrémité latérale dudit feuillard d'anode mais sans contact électronique avec les autres composantes de ladite cellule, ladite couche métallique constituant la borne externe du générateur en condition non habillé.

8. Procédé de préparation d'un dispositif de prise de contact électrique selon la revendication 7, caractérisé en ce que l'on dépose ladite couche métallique (g) pour qu'elle soit en contact intime avec ladite extrémité latérale dudit feuillard d'anode (b) permettant ainsi la collection électrique sur toute l'extrémité latérale dudit feuillard d'anode.

9. Procédé de préparation d'un dispositif de prise de contact électrique selon la revendication 7, caractérisé par la formation d'une zone métallique intermédiaire conductrice et cohésive (g) constituée de lithium ou d'alliages ductiles riches en lithium, en contact intime avec ladite extrémité latérale (x) dudit feuillard d'anode (b), et en ce que l'on s'assure que ladite couche métallique soit en contact électrique avec ladite extrémité latérale dudit feuillard d'anode par le truchement de ladite zone intermédiaire, ladite zone intermédiaire faisant en sorte de permettre la collection électrique sur toute l'extrémité latérale du feuillard d'anode en lithium ou en alliages ductiles riches en lithium, de façon à proteger les autres composantes de ladite cellule de chocs thermiques et mécaniques, et faciliter à ladite extrémité latérale du feuillard d'anode des échanges thermiques avec ledit générateur.

10. Procédé de préparation d'un dispositif de prise de contact électrique selon la revendication 8, caractérisé en ce que l'on supporte le feuillard d'anode (b) sur un film plastique constitué soit d'un film isolant (a), d'épaisseur inférieure à 10 microns, ou sur l'électrolyte polymère (c) lui-même dont l'épaisseur est comprise entre 5 et 100 microns, et l'on fait en sorte que la largeur de la zone de débordement (x) du feuillard d'anode représente moins de 5% environ de la largeur utile du feuillard d'anode.

## Patentansprüche

1. Vorrichtung zum elektrischen Kontaktieren wenigstens eines Anodenbandes eines Lithiumdünnschichtgenerators mit Polymerelektrolyt, welcher Generator aus wenigstens einer elektrochemischen mehrlagigen Zelle besteht, welche Zelle wenigstens ein Band (b) aus dem Grundmaterial Lithium mit einer Dicke zwischen etwa 1 und 50µm, das die Anode und ihren Kollektor (g) bildet, und weiterhin eine Kathode (f) und ihren Kollektor (e) sowie den besagten Polymerelektrolyten (c) umfaßt, wobei letztere gleichfalls in Form von Bändern vorliegen, dadurch gekennzeichnet, daß sich wenigstens ein seitliches Ende (x) des Anodenbandes (b) über die entsprechenden Enden der Kathode (f) und des besagten kathodischen Kollektors (e) hinauserstreckt, um einen überstehenden Bereich zu bilden, die besagte Vorrichtung wenigstens eine Metallschicht, (f', h oder j), die aus wenigstens einem steifen Metall besteht, das mit Lithium kompatibel ist, welches aus Nickel, Kupfer, Eisen, Molybdän, Titan oder deren Legierungen gewählt ist, die besagte Metallschicht in elektrischem Kontakt mit dem besagten seitlichen Ende des Anodenbandes aber nicht in elektrischem Kontakt mit den anderen Bauteilen der besagten Zelle steht und die besagte Metallschicht den äußeren Anschluß des Generators im nicht verkleideten Zustand bildet.

2. Vorrichtung zum elektrischen Kontaktieren nach Anspruch 1, dadurch gekennzeichnet, daß die besagte Metallschicht (g) in einem engen Kontakt mit dem besagten seitlichen Ende (x) des Anodenbandes (b) steht, so daß ein elektrisches Kollektieren am ganzen seitlichen Ende des Anodenbandes möglich ist.

3. Vorrichtung zum elektrischen Kontaktieren nach Anspruch 1, dadurch gekennzeichnet, daß sie einen leitenden und fest zusammenhängenden metallischen Zwischenbereich (g) umfaßt, der aus Lithium oder ziehbaren Legierungen reich an Lithium besteht und in engem Kontakt mit dem besagten seitlichen Ende (x) des besagten Anodenbandes (b) steht, die besagte Metallschicht in elektrischem Kontakt mit dem besagten seitlichen Ende des besagten Anodenbandes mittels des besagten Zwischenbereiches steht und der besagte Zwischenbereich so ausgebildet ist, daß eine elektrische Kollektion über das gesamte seitliche Ende des Anodenbandes aus Lithium oder ziehbaren Legierungen reich an Lithium möglich ist, die anderen Bauteile der besagten Zelle gegenüber mechanischen und thermischen Stoßbelastungen geschützt sind und der Wärmeaustausch mit dem besagten Generator am besagten seitlichen Ende des Anodenbandes erleichtert ist.

4. Vorrichtung zum elektrischen Kontaktieren nach Anspruch 2, dadurch gekennzeichnet, daß das Anodenband (b) auf einer dünnen Kunststoffschicht gehalten ist, die entweder eine dünne Isolierschicht (a) mit einer Stärke von weniger als 10µm oder den Polymerelektrolyten (c) bildet, der seinerseits eine Stärke zwischen 5 und 100µm hat, und die Größe des überstehenden Bereiches (x) des Anodenbandes wenigstens etwa 5% der nutzbaren Größe des Anodenbandes ausmacht.

5. Mehrlagiger Generator mit Polymerelektrolyt, der wenigstens die eine oder die andere Gruppe oder Untergruppe der folgenden dünnen Schichten umfaßt: Kunststoffisolator (a')/Lithiumanode (b)/Polymerelektrolyt (c)/Kathode (d)/ Metallkollektor (e) oder Kathode (f)/Polymerelektrolyt/Lithiumanode (b) /Polymerelektrolyt (c) /Kathode, welcher mit einer Vorrichtung (g, h, j) zum elektrischen Kontaktieren nach einem der Ansprüche 1 bis 4 versehen ist und dessen Kathode (f) seitlich von einer zweiten Vorrichtung eingefaßt ist, die aus einem überstehenden Teil ihres Kollektors (e) in elektrischem Kontakt mit einer metallischen Kollektorschicht (h) besteht.

6. Mehrlagiger Generator mit Polymerelektrolyt nach Anspruch 5, der in einem äußeren metallischen Gehäuse angeordnet ist und bei dem die Vorrichtung zum elektrischen Kontaktieren in einem direkten Kontakt mit dem äußeren metallischen Gehäuse derart angeordnet ist, daß der Wärmeaustausch über die Anode optimiert ist.

7. Verfahren zum Bilden einer Vorrichtung zum elektrischen Kontaktieren wenigstens eines Anodenbandes (b) eines Lithiumgenerators mit Polymerelektrolyt (c), welcher Generator aus wenigstens einer mehrlagigen elektrochemischen Zelle besteht, welche Zelle wenigstens ein Band aus dem Grundmaterial Lithium mit einer Stärke zwischen etwa 1 und 5µm, das die Anode (b) und deren Kollektor (e) bildet, umfaßt, und mit weiterhin einer Kathode (f) und deren Kollektor (e) sowie dem besagten Polymerelektrolyten (c), welche zuletzt genannten Bauelemente auch in Form von Bändern vorliegen, dadurch gekennzeichnet, daß man die besagte Zelle so ausbildet, daß wenigstens ein seitliches Ende des Anodenbandes (b) sich über die entsprechenden Enden der besagten Kathode (f) und des besagten kathodischen Kollektors (e) hinaus erstreckt, um einen überstehenden Bereich (x) zu bilden, daß man eine Metallschicht (f,h oder j), die wenigstens aus einem steifen Metall besteht, das mit Lithium kompatibel ist und aus Nickel, Kupfer, Eisen, Molybdän, Titan und deren Legierungen gewählt ist, auf der Höhe des besagten überstehenden Bereiches so anordnet, daß die besagte Metallschicht dann in einem elektrischen Kontakt mit dem besagten seitlichen Ende des besagten Anodenbandes aber nicht in einem elektronischen Kontakt mit den anderen Bauteilen der besagten Zelle steht, welche Metallschicht den äußeren Anschluß des Generators im nicht ummantelten Zustand bildet.

8. Verfahren zum Bilden einer Vorrichtung zum elektrischen Kontaktieren nach Anspruch 7, dadurch gekennzeichnet, daß man die besagte Metallschicht (g) so anordnet, daß sie dann in einem engen Kontakt mit dem besagten seitlichen Ende des Anodenbandes (b) derart steht, daß eine elektrische Kollektion über das gesamte seitliche Ende des besagten Anodenbandes möglich ist.

9. Verfahren zum Bilden einer Vorrichtung zum elektrischen Kontaktieren nach Anspruch 7, gekennzeichnet durch die Ausbildung eines leitenden und fest zusammenhängenden metallischen Zwischenbereiches (g), der aus Lithium oder einer ziehbaren Legierung reich an Lithium besteht und zwar in einem engen Kontakt mit dem besagten seitlichen Ende (x) des besagten Anodenbandes (b), und daß man sicherstellt, daß die besagte Metallschicht dann in einem elektrischen Kontakt mit dem besagten seitlichen Ende des besagten Anodenbandes mittels des besagten Zwischenbereiches steht, der besagte Zwischenbereich so ausgebildet ist, daß eine elektrische Kollektion über das gesamte seitliche Ende des Anodenbandes aus Lithium oder einer ziehbaren Legierung reich an Lithium möglich ist, derart, daß die anderen Bauteile der besagten Zelle gegenüber mechanischen und thermischen Stoßbelastungen geschützt sind und der Wärmeaustausch mit dem besagten Generator an dem besagten seitlichen Ende des Anodenbandes erleichtert ist.

10. Verfahren zum Bilden einer Vorrichtung zum elektrischen Kontaktieren nach Anspruch 1, dadurch gekennzeichnet, daß man das Anodenband (b) auf einer dünnen Kunststoffschicht, die dann eine dünne Isolierschicht (a) mit einer Stärke von weniger als 10µm bildet, oder auf dem Polymerelektrolyten (c) hält, der seinerseits eine Stärke hat, die zwischen 5 und 100µm liegt, und daß man dafür sorgt, daß die Größe des überstehenden Bereiches (x) des Anodenbandes wenigstens etwa 5% der nutzbaren Größe des Anodenbandes ausmacht.

## Claims

1. Device for electrical contacting on at least one anode foil of a polymer-electrolyte lithium thin-film generator, the said generator consisting of at least one multilayer electrochemical cell, the said cell comprising at least one lithium-based foil (b) having a thickness of between approximately 1 and 50 microns forming the anode and its collector (g) and furthermore a cathode (f) and its collector (e) just as for the said polymer electrolyte (c), the latter components also being in the form of foils, characterized in that at least one lateral edge (x) of the anode foil (b) extends beyond the corresponding ends of the said cathode (f) and of the said cathode collector (e) in order to form an overhang region, the said device including a metal layer (f', h or j) consisting of at least one lithium-compatible rigid metal, chosen from nickel, copper, iron, molybdenum, titanium or alloys thereof, the said metal layer being in electrical contact with the said lateral edge of the said anode foil but not in electronic contact with the other components of the said cell, the said metal layer constituting the external terminal of the generator in the non-encased condition.

2. Electrical contacting device according to Claim 1, characterized in that the said metal layer (g) is in intimate contact with the said lateral edge (x) of the said anode foil (b), thus allowing electrical collection over the entire lateral edge of the said anode foil.

3. Electrical contacting device according to Claim 1, characterized in that it includes a conductive and cohesive intermediate metal region (g) made of lithium or lithium-rich ductile alloys, in intimate contact with the said lateral edge (x) of the said anode foil (b), the said metal layer being in electrical contact with the said lateral edge of the said anode foil through the said intermediate region, the said intermediate region acting so as to allow electrical collection over the entire lateral edge of the anode foil made of lithium or of lithium-rich ductile alloys, to protect the other components of the said cell from thermal and mechanical shocks and to facilitate heat exchange with the said generator at the said lateral edge of the anode foil.

4. Electrical contacting device according to Claim 2, characterized in that the anode foil (b) is supported on a plastic film consisting either of an insulating film (a), of less than 10 microns in thickness, or of the polymer electrolyte (c) itself, the thickness of which is between 5 and 100 microns, the width of the overhang region (x) of the anode foil representing less than approximately 5% of the working width of the anode foil.

5. Multilayer polymer-electrolyte generator which includes at least one of the following film subassembly or assemblies: plastic insulator (a')/lithium anode (b)/polymer electrolyte (c)/cathode (d)/metallic collector (e) or cathode (f)/polymer electrolyte/lithium anode (b)/polymer electrolyte (c)/cathode provided with an electrical contacting device (g, h, j) according to any one of Claims 1 to 4, and in which the cathode (f) is collected laterally by a second device consisting of an overhang of its collector (e) in electrical contact with a metal collection layer (k).

6. Multilayer polymer-electrolyte generator according to Claim 5 in an external metal casing, the electrical contacting device of which is placed in direct contact with the external metal casing so as to optimize heat exchange via the anode.

7. Process for producing an electrical contacting device on at least one anode foil (b) of a polymer-electrolyte (c) lithium generator, the said generator consisting of at least one multilayer electrochemical cell, the said cell comprising at least one lithium-based foil having a thickness of between approximately 1 and 50 microns forming the anode (b) and its collector (a) [sic] and furthermore including a cathode (f) and its collector (e) in the same way as the said polymer electrolyte (c), these latter components also being in the form of foils, characterized in that the said cell is produced so that at least one lateral edge of the anode foil (b) extends beyond the corresponding ends of the said cathode (f) and of the said cathode collector (e) in order to constitute an overhang region (x), a metal layer (f', h or j), consisting of at least one rigid and lithium-compatible metal, chosen from nickel, copper, iron, molybdenum, titanium or alloys thereof, is deposited at the said overhang region so that the said metal layer is in electrical contact with the said lateral edge of the said anode foil but not in electronic contact with the other components of the said cell, the said metal layer constituting the external terminal of the generator in the non-encased condition.

8. Process for producing an electrical contacting device according to Claim 7, characterized in that the said metal layer (g) is deposited so that it is in intimate contact with the said lateral edge of the said anode foil (b), thus allowing electrical collection over the entire lateral edge of the said anode foil.

9. Process for producing an electrical contacting device according to Claim 7, characterized by the formation of a conductive and cohesive intermediate metal region (g) made of lithium or lithium-rich ductile alloys, in intimate contact with the said lateral edge (x) of the said anode foil (b) and in that care is taken to ensure that the said metal layer is in electrical contact with the said lateral edge of the said anode foil via the said intermediate region, the said intermediate region acting so as to allow electrical collection over the entire lateral edge of the anode foil made of lithium or lithium-rich ductile alloys, so as to protect the other components of the said cell from thermal and mechanical shocks and to facilitate heat exchange with the said generator at the said lateral edge of the anode foil.

10. Process for producing an electrical contacting device according to Claim 8, characterized in that the anode foil (b) is supported on a plastic film consisting either of an insulating film (a), having a thickness of less than 10 microns, or on the polymer electrolyte (c) itself, the thickness of which is between 5 and 100 microns, and the width of the overhang region (x) of the anode foil is made so that it represents less than approximately 5% of the working width of the anode foil.
